# EUROPÄISCHE PATENTSCHRIFT

(11) **EP 1 081 021 B1**
(45) Veröffentlichungstag und Bekanntmachung des Hinweises auf die Patenterteilung: **09.11.2005**
(21) Anmeldenummer: 00115519.1
(22) Anmeldetag: 19.07.2000
(51) Int. Cl.: B62D 13/04, B62D 13/02

(54) **Fahrzeuganhänger mit lenkbarer Achse**
Vehicle trailer with steerable axle
Remorque de véhicule à essieu dirigeable

(30) Priorität: 20.07.1999 DE 29912297 U
(43) Veröffentlichungstag der Anmeldung: 07.03.2001
(73) Patentinhaber: Zunhammer, Sebastian, 83301 Traunreut (DE)
(72) Erfinder: Zunhammer, Sebastian, 83301 Traunreut (DE)

(56) Entgegenhaltungen:
- DE-A- 19 701 296
- DE-C- 19 636 803
- FR-A- 1 379 824
- US-A- 5 364 116

## Beschreibung

Die Erfindung bezieht sich auf einen Anhänger mit lenkbarer Achse gemäß dem Oberbegriff des Anspruches 1. Ein derartiger Anhänger ist aus der US-A-5 364 116 bekannt.

Derartige Achsen für Anhänger sind bekannt. Bei bekannten lenkbaren Pendel-Tandemachsen ist der mechanische und hydraulische Aufwand erheblich, der Geradeauslauf unbefriedigend und die Sicherheit nicht unproblematisch.

Ein Vorschlag für die Verbesserung einer lenkbaren Tandemachse ist aus der DE-C-196 36 803 bekannt. Die dort beschriebene Achse ist verhältnismäßig einfach aufgebaut und deren Geradeauslauf ist sowohl bei Vorwärts- als auch bei Rückwärtsfahrt sichergestellt. Der dort gezeigte Gegenstand verfügt über eine lenkbare Tandemachse mit einem mehrteiligen Lenkzylinder, dessen Lenkzylinder-Teile über ein Rückschlagventil mit einem Vorratsbehälter für Fluid verbunden sind. Die Lenkzylinder-Teile pumpen bei Lenkbewegungen Fluid aus einem Vorratsbehälter in ihre Zylinderräume, bis Selbstsperrung auftritt. Für Kurvenfahrten wird das Rückschlagventil durch ein Entsperrsignal entsperrt, welches von der Betätigung des Blinkers abhängig ist.

Der Erfindung liegt demgegenüber die Aufgabe zugrunde, einen Anhänger mit lenkbarer Achse zu schaffen, bei dem die Achse besonders einfach aufgebaut ist und dennoch alle Vorteile einer lenkbaren Anhängerachse bietet, bei dem die Achse auch bei Rückwärtsfahrt lenkt und bei dem die Lenkbewegungen der gelenkten Räder durch die Steuerung begrenzbar sind.

Erfindungsgemäß wird diese Aufgabe durch einen Anhänger mit lenkbarer Achse mit den Merkmalen des Anspruches 1 gelöst, wobei die Erfindung durch die Merkmale der abhängigen Ansprüche in vorteilhafter Weise ausgestaltet wird.

Die Vorteile der Erfindung liegen vor allem darin, daß durch die Übertragung der resultierenden Bewegung des Zugfahrzeuges gegenüber dem gezogenen Fahrzeug der Anhänger exakt dem Zugfahrzeug folgt, und daß die Übertragung dieser Relativbewegung durch ein einfaches Zug- und Schubmittel nach Art eines Bowdenzuges erfolgt. Reine Lenkbewegungen der gelenkten Achse des Zugfahrzeuges - wie etwa deren Lenkbewegungen während des Stillstandes - haben keinerlei Lenkbewegungen der erfmdungsgemäß gelenkten Anhängerachse zur Folge. Dies ist reifenschonend und schont auch die Übertragungselemente der Lenkmechanik

Anhand von Ausführungsbeispielen wird die Erfindung mit Hilfe der Zeichnungen noch näher erläutert.

Es zeigt:
Figur 1 eine schematisch dargestellte Achsschenkel-Lenkachse eines schematisierten Anhängers mit angedeutetem Zugfahrzeug;
Figur 2a und 2b zwei Kugelkupplungen;
Figur 3 eine Pendel-Tandemachse in Lenkstellung für Kurvenfahrt und

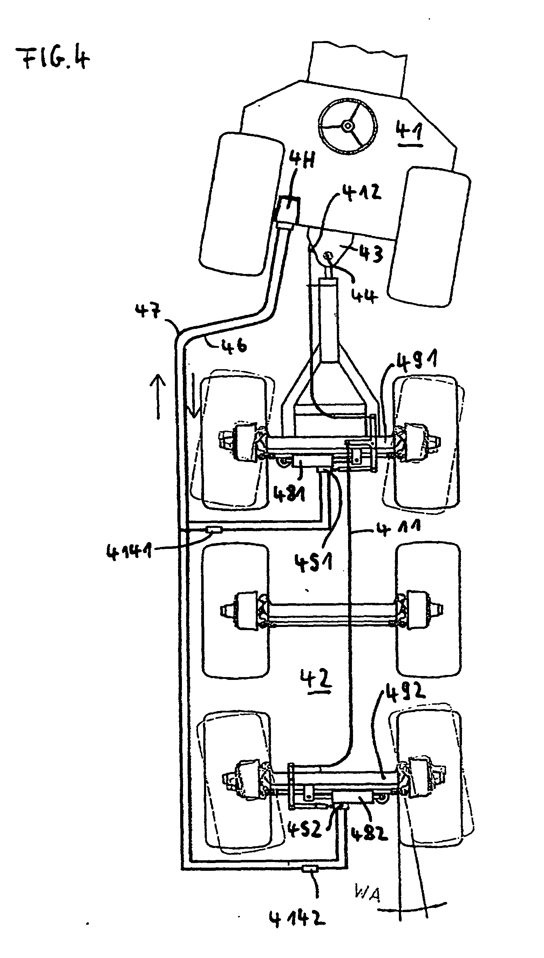

Figur 4 eine Gespann-Anordnung mit Tridemachse.

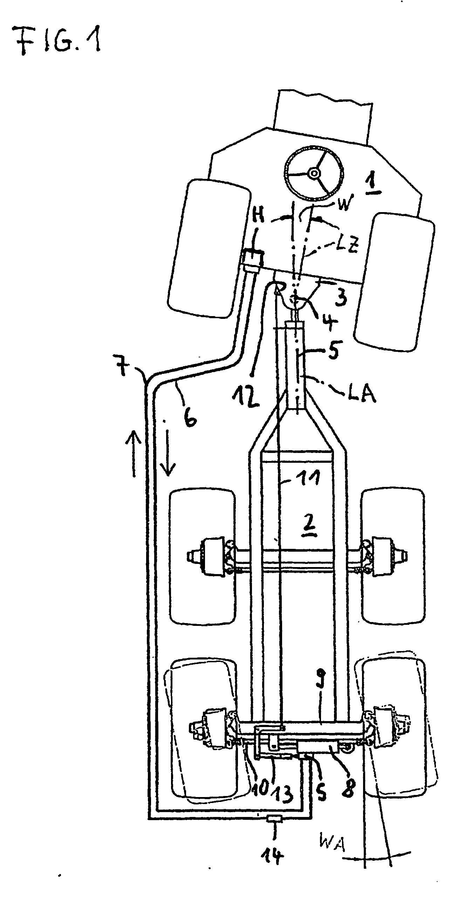

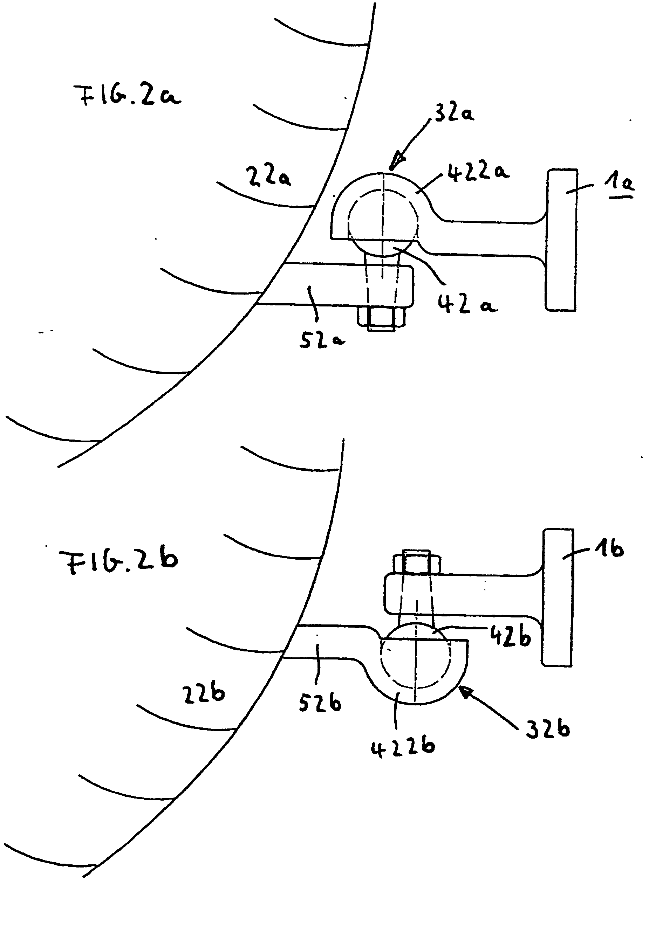

In Figur 1 ist stark schematisiert ein Zugfahrzeug 1 mit einem Anhänger 2 dargestellt. Das Zugfahrzeug 1 nimmt gegenüber dem Anhänger 2 einen Winkel W ein, der zwischen der Längsachse LZ des Zugfahrzeuges 1 und der Längsachse LA des Anhängers 2 gebildet wird. Das Zugfahrzeug 1 ist mit einer Aufnahmevorrichtung 3 ausgestattet, welche die Zugöse 4 einer Deichsel 5 des Anhängers 2 aufnimmt. Zugöse 4 und Aufnahme 3 können auch durch eine beliebige andere Art von Kupplung zwischen zwei Fahrzeugen realisiert sein, wie dies in den Figuren 2a und 2b gezeigt ist.

Da es von entscheidender Bedeutung ist, daß die Kupplung zwischen dem Zugfahrzeug 1 und dem Anhänger 2 spielfrei ist, damit eine hinreichende Lenkpräzision resultiert, kann die Kupplung in Form von unterschiedlichen Kugelkupplungen ausgeführt sein. In Figur 2a ist eine Kupplung 32a dargestellt, bei der an der Deichsel 52a des Anhängers 22a eine Kugel 42a montiert ist, während sich am Zugfahrzeug 1a eine korrespondierende Kugelaufnahme 422a befindet. In Figur 2b ist eine Variante dargestellt, bei der an der Deichsel 52b eine Kugelaufnahme 422b montiert ist, während sich die dazu gehörige Kugel 42b am Zugfahrzeug 1b befindet. Es versteht sich, daß weitere Variationen der spielfreien Kupplung möglich sind, beispielsweise können Kompensationselemente für eine spielbehaftete Klauen- und Ösen-Kupplung vorgesehen werden.

Zurück zu Figur 1- dort ist des weiteren gezeigt, daß das Zugfahrzeug 1 über eine Bordhydraulik H verfügt, mit welcher Hydraulik-Aggregate des Zugfahrzeuges 1 versorgt werden. Zwei Hydraulikleitungen 6 und 7 sind zur Versorgung eines Hydrauklizylinders 8 vorgesehen, welcher den Lenkzylinder der lenkbaren Achse 9 des Anhängers 2 bildet. Der Lenkzylinder 8 kann auch von anderer Bauart sein, grundsätzlich ist er durch jede andere Art von Fluidzylinder realisierbar. Der Einfachheit halber soll im Ausführungsbeispiel in der folgenden Beschreibung immer von "hydraulischem" Lenkzylinder 8 geschrieben werden, ohne daß damit eine diesbezügliche Einschränkung geschaffen werden soll.

Der Lenkzylinder 8 betätigt über Spurstangen 10 die lenkbare Achse 9 in Abhängigkeit von Lenkinformationen des Zugfahrzeuges 1.Diese Lenkinformationen werden durch ein Zug-und Schubmittel 11 vom Zugfahrzeug 1 auf ein Steuerventil S zur Steuerung des Hydraulikfluids übertragen, welches den Lenkzylinder 8 beaufschlagt. Dieser veranlaßt entsprechend seiner Versorgung mit Fluid über die Spurstange 10 den entsprechenden Einschlag der lenkbaren Achse 9.

Wesentlich ist beim vorliegenden Gegenstand, daß die Lenkinformation direkt durch das Zug- und Schubmittel 11 in Form eines sogenannten Bowdenzuges übertragen wird, dessen freies Ende an einem Lenkpunkt 12 befestigt ist, welcher sich in einem bestimmten Abstand "a" vom Zugöse 4 an der Aufnahme 3 befindet. Die Lenkinformation wird demgemäß aus der realen Lenkbewegung abgeleitet, die zwischen dem Zugfahrzeug 1 und dem Anhänger 2 stattfindet. Ein Maß für die Lenkinformation ist danach ein Winkel W, der sich zwischen der Längsachse LZ des Zugfahrzeuges 1 und der Längsachse LA des Anhängers 2 einstellt. Dieser direkte Abgriff der Lenkinformation aus der Winkelkonstellation zwischen dem Zugfahrzeug 1 und dem Anhänger 2 hat besondere Vorteile, denn Lenkbewegungen der Lenkachse des Zugfahrzeuges 1 gehen erst in Lenkbewegungen der Lenkachse 9 des Anhängers 2 ein, wenn tatsächlich eine Richtungsänderung des Fahrzeuggespannes 1 und 2 stattfindet. Lenkausschläge im Stillstand des Zugfahrzeuges 1 schlagen sich nicht in Lenkbewegungen der Lenkachse 9 des Anhängers 2 nieder. Dies schont die Lenkmechanik der lenkbaren Achse 9 des Anhängers 2 und dessen Reifen.

Damit der Sollwert der Lenkbewegung der Lenkachse 9 immer proportional dem Istwert des Lenkwinkels W zwischen dem Zugfahrzeug 1 und dem Anhänger 2 ist, erfolgt die Nachführung der Lenkbewegung der Lenkachse 9 bis zu einer selbsttätigen Begrenzung des Lenkausschlages durch das Steuerventil S. Das Steuerventil S ist dafür mit einem der lenkbaren Teile der Achse 9 mechanisch verbunden und macht dadurch dessen Lenkbewegung selbsttätig mit. Dies bedeutet, daß bei der Übertragung der Lenkbewegung zwischen Zugfahrzeug 1 und Anhänger 2 durch den Bowdenzug 11 das Steuerventil S den Hydraulikkreislauf öffnet und dieser solange geöffnet bleibt, bis das mechanisch mit der Lenkachse 9 verbundene Steuerventil S durch seine zwangsläufige Eigenbewegung mit der Lenkachse 9 den Hydraulikkreislauf wieder schließt. Daraus folgt, daß die Lenkachse 9 nur bis auf ihren Sollwert nachgeführt werden kann.

Besonders vorteilhaft ist die Zwischenschaltung eines Sicherheitselementes 13 zwischen das Zug- und Schubmittel 11 und den Lenkzylinder 8. Dieses Sicherheitselement 13 kann als sogenannter Überhubzylinder ausgebildet sein, welcher so ausgelegt ist, daß er Zug- und Schubbewegungen des Bowdenzuges 11 nur bis zu einem vorbestimmbaren Ausmaß an den Lenkzylinder 8 weitergibt. Das Ausmaß der Weitergabe kann durch die maximalen Lenkausschläge der Lenkachse 9 gegeben sein. Weitere Zug-und Schubbewegungen des Bowdenzuges 11 werden durch den Überhub des Sicherheitselementes 13 aufgenommen, ohne daß sie an den Lenkzylinder 8 weitergegeben werden. Besonders starke Lenkwinkel W zwischen dem Zugfahrzeug 1 und dem Anhänger 2 führen durch diese Sicherheitsmaßnahme nicht zu Schäden an der Lenkung des Anhängers 2.

Zur Vermeidung von Unfällen und/oder schweren Schäden am Fahrzeug ist eine weitere Sicherheitsvorrichtung 14 im Hydraulikkreislauf vorhanden. Diese Sicherheitsvorrichtung 14 in Form eines Druckabfallstellgliedes ist so konzipiert, daß die Lenkachse 9 automatisch und zwangsweise in die Stellung "geradeaus" gestellt wird, sobald im Hydraulikkreislauf ein unzulässiger Wert auftritt. Dies kann beispielsweise ein Druckverlust sein.

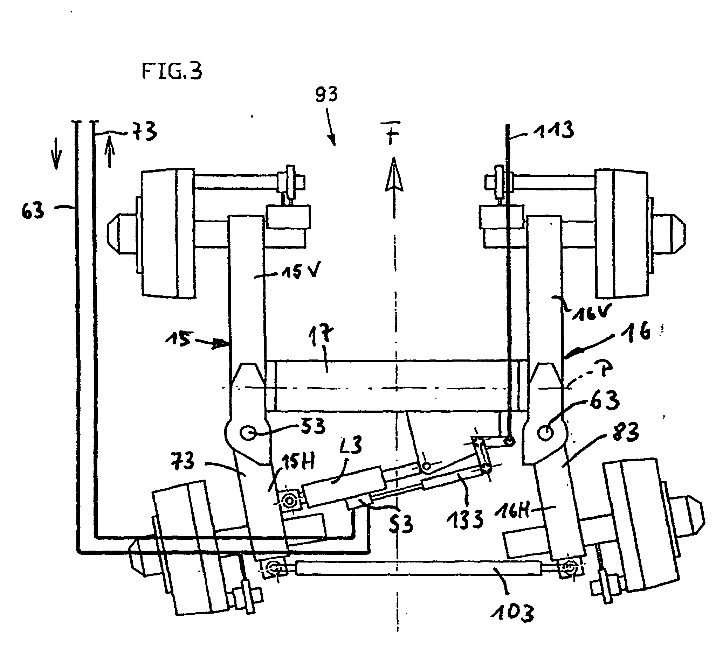

In Figur 3 ist eine lenkbare Pendel-Tandemachse 93 schematisch dargestellt. In Fahrtrichtung F sind zwei Pendelholme 15 und 16 vorgesehen, die unabhängig voneinander in einem Mittelachsrohr 17 drehbar gelagert sind. Die Pendelholme 15 und 16 nehmen jeweils Vorder- und Hinterachshälften 15V, 16V und 15H, 16H auf, so daß die linke Seite unabhängig von der rechten Seite um die Pendelachse P des Mittelachsrohres 17 pendeln kann.

Um den Reifenverschleiß beim Kurvenfahren zu verringern, sind die beiden Hinterachshälften 15H und 16H an Lenkholmen 73 und 83 befestigt, die an Lenkbolzen 53 und 63 drehbar gelagert sind. Eine Spurstange 103 verbindet die gelenkig an den Pendelholmen 15 und 16 befestigten Lenkholme 73 und 83.

Ein hydraulischer Lenkzylinder L3, ist an einem der Lenkholme 73 als einem ersten Befestigungspunkt gelenkig befestigt. Des weiteren ist er am Mittelachsrohr 17 befestigt. Auch hier ist ein Sicherheitselement in Form eines Überhubzylinders S3 vorgesehen, welcher zwischen den Lenkzylinder L3 und das Zug- und Schubmittel 113 geschaltet ist. Wie auch im vorausgegangenen Ausführungsbeispiel wird die reale Fahrzeugkonstellation zwischen einem hier nicht dargestellten Zugfahrzeug und dem Anhänger 23 mit Hilfe des außermittig angeordneten Bowdenzuges 113 abgegriffen um mitttels der Bordhydraulik des Zugfahrzeuges die Lenkachse 93 des Anhängers 23 zu bewegen.

Analog zu den bisher erläuterten Ausführungsbeispielen sei auch noch dargestellt, daß die Erfindung auch bei Anhängern 42 mit Tridemachse vorteilhaft eingesetzt werden kann. Von den drei Achsen eines mit Tridemachse ausgerüsteten Anhängers 42 sind zwei als Lenkachsen 491 und 492 ausgebildet. Für diese Lenkachsen 491 und 492 gelten in analoger Weise die Ausführungen zu den Figuren 1 und 3, wobei für gleichartige Elemente den Bezugsziffern lediglich eine "4" als Indexziffer vorangestellt worden ist. Selbstverständlich sind für jede der Lenkachsen die Sicherheitselemente bzw. Vorrichtungen wie Überhubzylinder 4131, 4132 und Druckabfallstellglied 4142, 4142 vorhanden. Die Wirkungsweise der Lenkungen entspricht sinngemäß den Ausführungen, die für die anderen Ausführungsbeispiele bereits gemacht wurden.

## Patentansprüche

1. Fahrzeuganhänger mit lenkbarer Achse (9; 93; 491,492), vorzugsweise landwirtschaftlicher Anhänger (2), mit wenigstens einem Achskörper (17), an welchem der lenkbare Teil (73,83) der Achse lenkbar gelagert ist und mit wenigstens einem durch ein Steuerventil (5; 53; 451,452) mit Fluid beaufschlagten Lenkzylinder (8; 83; 481,482) zum Auslenken des lenkbaren Teils der Achse, wobei das Steuerventil über ein Zug- und Schubmittel (11; 113; 411,412) ansteuerbar ist, welches mit seinem freien Ende am Zugfahrzeug (1; 1a; 1b; 41) des Fahrzeuganhängers anlenkbar ist, und dass in Abhängigkeit vom Winkel (W) zwischen der Längsachse (LZ) des Zugfahrzeuges und der Längsachse (LA) des Fahrzeuganhängers das Zug- und Schubmittel (11; 113; 411) das Steuerventil derart ansteuert, dass der lenkbare Teil der Achse vom Lenkzylinder (8; 83; 481) um einen Winkel (WA) ausgelenkt wird, welcher dem Winkel (W) zwischen den Längsachsen der genannten Fahrzeuge proportional ist **dadurch gekennzeichnet, dass** das Steuerventil (S) mit einem der lenkbaren Teile der Achse (9) derart verbunden ist, dass es nach Erreichen des dem Lenkwinkel (W) proportionalen Sollwertes den Ausschlag des lenkbaren Teils der Lenkachse (9; 93; 491, 492) selbsttätig begrenzt.

2. Anhänger nach Anspruch 1, **dadurch gekennzeichnet, dass** eine Vorrichtung (3, 4; 32a, 42a, 422a; 32b, 42b, 422b) zum spielfreien Ankoppeln an das Zugfahrzeug (1; 1a, 1b; 41) vorhanden ist.

3. Anhänger nach Anspruch 2, **dadurch gekennzeichnet, dass** die Vorrichtung zum spielfreien Ankoppeln an das Zugfahrzeug (1; 1a, 1b; 41) als Kugelkupplung (32a, 42a, 422a; 32b, 42b, 422b) ausgebildet ist.

4. Anhänger nach Anspruch 1, **dadurch gekennzeichnet, dass** sich der Anlenkpunkt (12; 412) des Zug- und Schubmittels (11; 113; 411) am Zugfahrzeug (1; 1 a, 1b; 41) außerhalb der gemeinsamen Längsachse (LZ, LA) von Zugfahrzeug (1; 1a, 1b; 41) und Fahrzeuganhänger (2; 22a, 22b; 23; 42) befindet.

5. Anhänger nach Anspruch 1, **dadurch gekennzeichnet, dass** die Versorgung des Lenkzylinders (8; 83; 481, 482) mit Fluid über Fluidleitungen (6, 7) von der Bordhydraulik (H) des Zugfahrzeuges (1; 1a, 1b; 41) aus erfolgt.

6. Anhänger nach Anspruch 1, **dadurch gekennzeichnet, dass** zwischen dem Zug- und Schubmittel (11; 113; 411) und dem Lenkzylinder (8; 83; 481, 482) ein Sicherheitselement in Form eines doppelseitig wirkenden Überhubzylinders (13; 133; 4131, 4132) angeordnet ist.

7. Anhänger nach Anspruch 1, **dadurch gekennzeichnet, dass** die Achse als Achsschenkel-Lenkachse (9; 491, 492) ausgebildet ist.

8. Anhänger nach Anspruch 1, **dadurch gekennzeichnet, dass** die Achse Bestandteil einer Tandem-Pendelachse (92) ist.

9. Anhänger nach Anspruch 1, **dadurch gekennzeichnet, dass** die Achse als Tridemachse mit zwei Achsschenkel-Lenkachsen (491, 492) ausgebildet ist.

10. Anhänger nach Anspruch 6, **dadurch gekennzeichnet, dass** eine Sicherheitsvorrichtung in Form eines Druckabfallstellgliedes (4141, 4142) vorhanden ist.

## Claims

1. A motor vehicle trailer with a steerable axle (9; 93; 491,492), preferably an agricultural trailer (2), with at least one axle body (17), on which the steerable part (73,83) of the axle is mounted and with at least one hydraulic steering cylinder (8; 83; 481,482), actuated by a control valve (5; 53; 451,452), which controls the steerable part of the axle, and where the control valve is moved by a push-pull linkage (11; 113; 411, 412) whose free end on the tractor vehicle (1; 1a; 1b; 41) of the motor vehicle trailer is mobile and controlled according to the angle (W) between the lengthways axis (LZ) of the tractor vehicle and the lengthways axis (LA) of the motor vehicle trailer so as to actuate the push-pull linkage (11; 113; 411) and thereby the control valve in such a way that the steering cylinder (8; 83; 481) moves the steerable part of the axle through an angle (WA) which is proportional to the angle (W) between the lengthways motor vehicle axes **characterised in that** the control valve (S) is connected to the steerable part of the axle (9) in such a way that the travel of the steerable part of the steered axle (9; 93; 491, 492) is automatically limited when the steering angle (W) proportional set value is reached.

2. A trailer according to claim 1, **characterised in that** a device (3, 4; 32a, 42a, 422a; 32b, 42b, 422b) for a zero backlash coupling to the tractor vehicle (1; 1a, 1b; 41) is present.

3. A trailer according to claim 2, **characterised in that** the device for zero backlash coupling to the tractor (1; 1a, 1b; 41) is a ball-shaped coupling (32a, 42a, 422a; 32b, 42b, 422b).

4. A trailer according to claim 1, **characterised in that** the control point (12; 412) of the push-pull linkage (11; 113; 411) on the tractor vehicle (1; 1a, 1b; 41) is outside the common lengthways axis (LZ, LA) of the tractor vehicle (1; 1a, 1b; 41) and the motor vehicle trailer (2; 22a, 22b; 23; 42).

5. A trailer according to claim 1, **characterised in that** the steering cylinder (8; 83; 481, 482) is supplied with hydraulic fluid through the fluid pipes (6, 7) from the on-board hydraulics (H) of the tractor vehicle (1; 1a, 1b; 41).

6. A trailer according to claim 1, **characterised in that** there is a safety device consisting of a double-acting overstroke cylinder (13; 133; 4131, 4132) between the push-pull linkage (11; 113; 411) and the steering cylinder (8; 83; 481, 482).

7. A trailer according to claim 1, **characterised in that** the axle is a steered axle (9; 491, 492) with a steering knuckle.

8. A trailer according to claim 1, **characterised in that** the axle is part of a twin floating axle (92) system.

9. A trailer according to claim 1, **characterised in that** the axle is part of a triple axle system with two steered axles (491, 492) with steering knuckles.

10. A trailer according to claim 6, **characterised in that** there is a safety device consisting of a pressure drop modulator (4141, 4142).

## Revendications

1. Une remorque avec essieu orientable (9 ;93 ; 491, 492), de préférence une remorque agricole (2), avec au moins un corps d'essieu (17) sur lequel la partie orientable (73, 83) de l'essieu est logée de façon orientable et avec au moins un vérin de direction (8 ; 83 ; 481, 482) alimenté en fluide à travers une soupape de distribution (5 ; 53 ; 451, 452) pour orienter la partie orientable de l'essieu, dans laquelle la soupape de distribution est pilotable à l'aide d'un moyen de traction et de poussée (11 ; 113 ; 411, 412) pouvant être accouplé de façon articulée au véhicule de traction (1 ; 1a ; 1b ; 41) de la remorque par son extrémité libre, et dans laquelle en fonction de l'angle (W) entre l'axe longitudinal (LZ) du véhicule de traction et l'axe longitudinal (LA) de la remorque, le moyen de traction et de poussée (11; 13 ; 114) pilote la soupape de distribution de telle sorte que la partie orientable de l'essieu est orientée par le vérin de direction (8 ; 83 ; 481) à un angle (WA) proportionnel à l'angle (W) entre les axes longitudinaux desdits véhicules, **caractérisée en ce que** la soupape de distribution (S) est reliée à une des parties orientables de l'essieu (9) de façon à limiter automatiquement le braquage de la partie orientable de l'essieu directeur (9 ; 93 ; 491, 492) quand la valeur théorique proportionnelle à l'angle de braquage (W) est atteinte.

2. La remorque selon la revendication 1, **caractérisée en ce qu'**un dispositif (3, 4 ; 32a, 42a, 422a, 32b, 42b, 422b) est prévu pour l'accouplement sans jeu au véhicule de traction (1; 1a, 1b ; 41).

3. La remorque selon la revendication 2, **caractérisée en ce que** le dispositif pour l'accouplement sans jeu au véhicule de traction (1 ; 1a, 1b; 41) est conçu comme un accouplement à boule (32a, 42a, 422a; 32b, 42b, 422b).

4. La remorque selon la revendication 1, **caractérisée en ce que** le point d'articulation (12, 412) du moyen de traction et de poussée (11 ; 113 ; 411) se trouve sur le véhicule de traction (1 ; 1a, 1b ; 41) est placé hors de l'axe longitudinal commun (LZ, LA) du véhicule de traction (1 ; 1a, 1b ;41) et de la remorque (2 ; 22a, 22b ; 23, 42).

5. La remorque selon la revendication 1, **caractérisée en ce que** l'alimentation en fluide du vérin de direction (8 ; 83 ; 481, 482) est effectuée par l'intermédiaire de conduites de fluide (6, 7) à partir de l'hydraulique à bord (H) du véhicule de traction (1; 1a, 1b; 41).

6. La remorque selon la revendication 1, **caractérisée en ce qu'**entre le moyen de traction et de poussée (11 ; 113, 411) et l'essieu de direction (8 ; 83 ; 481,482) est agencé un élément de sécurité sous la forme d'un vérin de dépassement de course à double effet (13 ; 133 ; 4131, 4132).

7. La remorque selon la revendication 1, **caractérisée en ce que** l'essieu est conçu comme essieu directeur à fusée (9 ; 491, 492).

8. La remorque selon la revendication 1, **caractérisée en ce que** l'essieu fait partie d'un essieu tandem oscillant (92).

9. La remorque selon la revendication 1, **caractérisé en ce que** l'essieu est conçu comme un essieu tridem avec deux essieux directeurs à fusée (491, 492).

10. La remorque selon la revendication 6, **caractérisé en ce qu'**un dispositif de sécurité est prévu sous forme d'un actionneur réagissant aux baisses de pression (4141, 4142).
